# EUROPEAN PATENT SPECIFICATION

(11) **EP 2 655 726 B1**
(45) Date of publication and mention of the grant of the patent: **14.10.2015**
(21) Application number: 11790793.1
(22) Date of filing: 05.12.2011
(51) Int. Cl.: D06F 58/28, D06F 58/20

(54) **HEAT PUMP LAUNDRY DRYER**
WÄRMEPUMPENWÄSCHETROCKNER
SECHE-LINGE AVEC POMPE A CHALEUR

(30) Priority: 24.12.2010 TR 201010886
(43) Date of publication of application: 30.10.2013
(73) Proprietor: Arçelik Anonim Sirketi, 34950 Istanbul (TR)
(72) Inventor: BALIOGLU, Onder, 34950 Istanbul (TR); HOCAOGLU, Sabahattin, 34950 Istanbul (TR); KURTULDU, Ercan, 34950 Istanbul (TR)
(86) International application number: PCT/EP2011/071746
(87) International publication number: WO 2012/084474

(56) References cited:
- EP-A1- 0 999 302
- EP-A2- 1 884 586
- DE-A1-102008 041 019

## Description

The present invention relates to a heat pump laundry dryer the energy consumption of which is reduced.

In the heat pump laundry dryers, the heat pump used for drying the laundry is composed of flow tubes through which the refrigerant circulates, a compressor that provides the circulation of the refrigerant by pressurizing it, an evaporator and a condenser, and the drying process is performed by passing the process air over the laundry. The condenser disposed in the heat pump functions as a heater and the evaporator functions as a condenser. The process air is heated while passing from the condenser, delivered onto the laundry as being heated and after dehumidifying the laundry, leaves its humidity while passing over the evaporator. In the cycle wherein the refrigerant circulates in the flow tubes, the refrigerant that is delivered from the compressor to the condenser with increased pressure and temperature enters the evaporator by passing through the capillary tube with decreased pressure, and the evaporator absorbs heat in order to dehumidify the process air. The laundry drying process is realized in three stages. When the laundry dryer is operated, first the heating stage is realized and the heating of laundry is provided. In the first heating stage, the dehumidification speed is too low. In the second stage, the drying system enters the steady state and the humidity on laundry is removed in a fast and effective way. In the third stage, since the amount of humidity on the laundry is decreased, the low-speed dehumidification process is realized. In the heating stage which is the first stage of the laundry drying process, approximately 40% of the total duration of the drying process is spent, and a substantial amount of energy is consumed. In the state of the art, in the laundry dryers wherein the heat pump system operates, various embodiments are performed so that the heating stage passes quickly. For example, a heater is disposed at the process air duct, the heating process is shortened by increasing the temperature of inlet air of the drum quickly, but the total energy consumption is increased.

In the state of the art Japanese Patent Applications No. JP2000304449 and JP2009095483, embodiments in the heat pump laundry dryers are explained, wherein power consumption and the time of drying process are decreased by increasing the

In the state of the art Japanese Patent Applications No. JP2000304449 and JP2009095483, embodiments in the heat pump laundry dryers are explained, wherein power consumption and the time of drying process are decreased by increasing the effectiveness of dehumidification and the energy efficiency is improved.

The European Patent Application EP 1 884 586 A2 relates to a dryer that has a drum for receiving clothes that are to be washed. A process cycle guides heat processed air through the drum for cooling the air for dehydration and for further preheating the air. A heat pump circuit feeds a medium by a condenser, a throttle body, an evaporator and a compressor. An additional heat exchanger is arranged between the condenser and the throttle body for releasing heat from the heat pump circuit. A blower is controlled depending on the temperature of the heat pump circuit.

In the European Patent Application EP 0 999 302 A1, a similar dryer is disclosed in which a heat flow correction element is incorporated into the refrigerant cycle between the refrigerant outlet of the refrigerant evaporator and the refrigerant inlet of the compressor.

The aim of the present invention is the realization of a heat pump laundry dryer wherein energy saving is provided by decreasing the heating time in the drying process.

The heat pump laundry dryer realized in order to attain the aim of the present invention is described in claim 1. It has a circulation line composed of flow tubes through which the refrigerant circulates, and comprises a heat exchanger in contact with the ambient air disposed at the portion of the circulation line between the capillary tube and the evaporator and which provides the refrigerant in the circulation line to be heated by transmitting the ambient air temperature thereto, and thus provides the refrigerant temperature to be increased in the evaporator and in the condenser. The temperature of the surfaces of the condenser in contact with the drying air increases as a result of the increase of the condensation temperature of the refrigerant in the condenser and the drying air is heated effectively by the condenser the operating efficiency of which is increased.

According to the present invention, the laundry dryer comprises air holes disposed on the exterior body walls in the vicinity of the heat exchanger and that provide the heat exchanger to contact with the ambient air.

Moreover, in the laundry dryer the ambient air absorbed by means of a fan from the air holes is delivered onto the heat exchanger and the enforced heat convection is realized between the ambient air and the heat exchanger.

Moreover, the laundry dryer comprises a temperature sensor which detects the ambient temperature, and the control unit compares the information of the ambient temperature received from the temperature sensor with the refrigerant temperature in the evaporator inlet which is pre-recorded in the memory, and if the refrigerant temperature in the evaporator inlet which is prerecorded in the memory, and if the ambient temperature is higher than the refrigerant temperature, operates the heating fan, if the ambient temperature is lower than the refrigerant temperature, stops the heating fan.

In the heat pump laundry dryer, by means of the heat exchanger disposed at the inlet portion of the evaporator of the circulation line, the efficiency of the condenser is increased and the energy saving is provided by shortening the time of the heating phase of the drying process.

The laundry dryer realized in order to attain the aim of the present invention is illustrated in the attached figures, where:

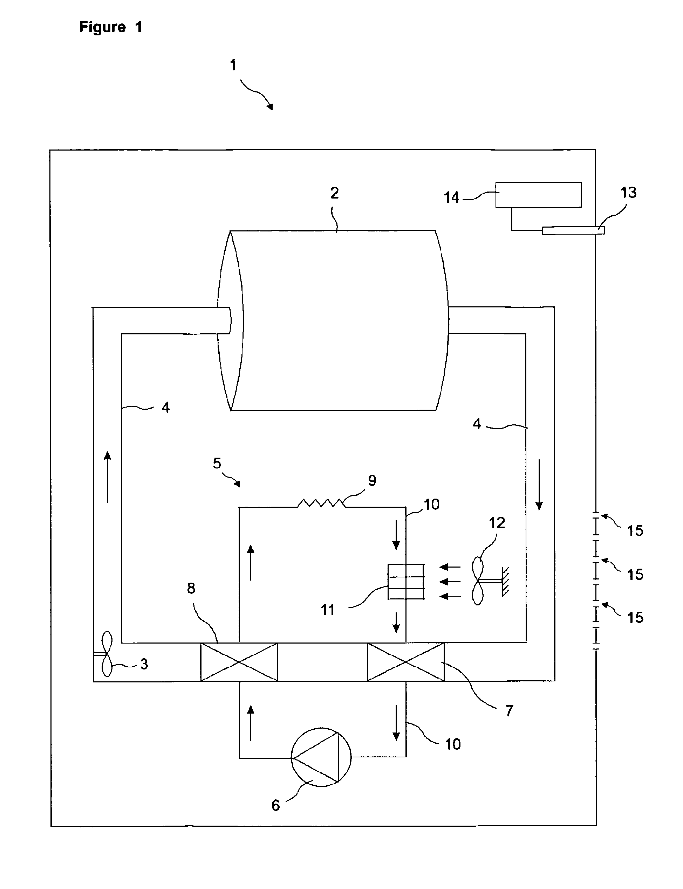

Figure 1 - is the schematic view of a heat pump laundry dryer wherein a heat exchanger is provided on the circulation line.

The elements illustrated in the figures are numbered as follows:
1. Laundry dryer
2. Drum
3. Drying air fan
4. Air circulation duct
5. Heat pump
6. Compressor
7. Evaporator
8. Condenser
9. Capillary tube
10. Circulation line
11. Heat exchanger
12. Heating fan
13. Temperature sensor
14. Control unit
15. Air hole

The laundry dryer (1) comprises a drum (2) wherein the laundry to be dried is placed, a drying air fan (3), an air circulation duct (4) wherein the drying air cycle is performed by means of the drying air fan (3) and a heat pump (5) wherein the refrigerant cycle is performed. Said laundry dryer (1) is operated, firstly the heating stage, secondly in steady state dehumidifying stage and thirdly in the low speed dehumidification stage,

The heat pump (5) comprises a compressor (6) that provides the refrigerant to be sucked and compressed, an evaporator (7) providing the drying air in the air circulation duct (4) to be dehumidified, a condenser (8) providing the dehumidified drying air to be heated, a capillary tube (9) disposed between the condenser (8) and the evaporator (7) and a circulation line (10) composed of tubes that provides the refrigerant compressed by the compressor (6) to be delivered to the compressor (6) after flowing through respectively the condenser (8), the capillary tube (9) and the evaporator (7) in that order.

The laundry dryer (1) of the present invention comprises a heat exchanger (11) in contact with the ambient air, disposed at the portion of the circulation line (10) between the capillary tube (9) and the evaporator (7) and which provides the refrigerant in the circulation line (10) to be heated by transmitting the ambient air temperature thereto. Said heat exchanger (11) is activated only in heating stage of the drying operation when the temperature level of the ambient air is higher than the temperature level of the refrigerant at normal ambient air conditions.

The laundry dryer (1), furthermore, comprises one or more than one air hole (15) disposed on the exterior body walls (D) in the vicinity of the heat exchanger (11) and that provides the heat exchanger (11) to be in contact with the ambient air.

Since the temperature of the refrigerant in the circulation line (10) at the evaporator (7) inlet transfers its heat to the drying air while passing through the condenser (8), the temperature of refrigerant is lower than the ambient air temperature at normal conditions. The refrigerant does not yet reach the evaporator (7) at the evaporator (7) inlet and does not absorb the heat from the outside. The heat exchanger (11) heats the refrigerant by transferring heat from the ambient air at the evaporator (7) inlet and provides the evaporation temperature of the refrigerant in the evaporator (7) to be increased and provides the condensation temperature of the refrigerant, continuing its cycle, in the condenser (8) to be increased and hence the surface temperature of the condenser (8) to be increased and provides the drying air in the air circulation duct (4) to be heated in a fast and effective way by the condenser (8).

In the heat pump laundry dryer (1), the condenser (8) radiates heat into the drying air in the air circulation duct (4) and the evaporator (7) absorbs the heat of the drying air. The drying air heats up while passing through the condenser (8) and is cooled while passing through the evaporator (7). The heat exchanger (11) disposed at the portion of the circulation line (10) at the evaporator (7) inlet heats (conditions) the refrigerant which has a falling pressure while coming from the capillary tube (9) with the heat transferred from the ambient air before the depressurized refrigerant interacts with the drying air in the evaporator (7). As a result of this, the evaporation temperature that the refrigerant reaches while passing through the evaporator (7) and the condensation temperature that it reaches while passing through the condenser (8) increase successively. Due to the effect of the said successive heat increase of the refrigerant, the surface temperature of the condenser (8) in contact with the drying air in the air circulation duct (4) increases and thus the condenser (8) is provided to heat the drying air quickly. The terms of "evaporation" and "condensation" do not relate to the drying air in the air circulation duct (4), but relate directly to the refrigerant passing through the evaporator (7) and the condenser (8).

In an embodiment of the present invention, the laundry dryer (1) comprises a heating fan (12) which sucks the ambient air from the air holes (15) and delivers it onto the heat exchanger (11) and thus which accelerates the heat transfer from the ambient air to the heat exchanger (11). The ambient air is sucked by the heating fan (12) by means of the air holes (15) and is delivered onto the heat exchanger (11) and thus the refrigerant temperature at the evaporator (7) inlet is provided to be heated with the enforced heat convection until reaching the ambient air temperature.

In an another embodiment of the present invention the laundry dryer (1) comprises a temperature sensor (13) detecting the ambient temperature and a control unit (14) which compares the data of the ambient temperature received from the temperature sensor (13) with the refrigerant temperature in the evaporator (7) inlet determined previously by the experimental studies and recorded in the memory thereof and which provides the heating fan (12) to be operated, if the ambient air temperature is higher than the refrigerant temperature, and which provides the heating fan (12) to be stopped, if the temperature of the ambient air is lower than the temperature of the refrigerant. At ambient temperatures at normal conditions or higher than the normal conditions, the refrigerant at the evaporator (7) inlet is provided to be heated by operating the heating fan (12), and at low ambient temperatures, the low ambient temperature is prevented from being transferred to the refrigerant through the heat exchanger (11) by the heating fan (12) being stopped.

In the laundry dryer (1) of the present invention, the refrigerant is provided to be heated before entering the evaporator (7) by means of the heat exchanger (11) which is disposed at the evaporator (7) inlet in the heat pump (5). The heat effect therein provides the condensation temperature in the condenser (8) to be high and thus the efficiency of the condenser (8) is increased. The temperature of the condenser (8) surfaces in contact with the drying air is increased, the drying air in the air circulation duct (4) is effectively heated by the condenser (8) and the energy consumption is provided to be reduced by reducing the time of the heating stage which is the first stage of the drying process.

It is to be understood that the present invention is not limited by the embodiments disclosed above and a person skilled in the art can easily introduce different embodiments. These should be considered within the scope of the protection postulated by the claims of the present invention.

## Claims

1. A laundry dryer (1) comprising a drum (2) wherein the laundry to be dried is placed, a drying air fan (3), an air circulation duct (4) wherein the drying air cycle is performed, and a heat pump (5) having a compressor (6) wherein the refrigerant cycle is performed and that provides the refrigerant to be sucked and compressed, an evaporator (7) providing the drying air in the air circulation duct (4) to be dehumidified, a condenser (8) providing the dehumidified drying air to be heated, a capillary tube (9) disposed between the condenser (8) and the evaporator (7) and a circulation line (10) composed of pipes that provide the refrigerant compressed by the compressor (6) to be delivered to the condenser (8), the capillary tube (9) and the evaporator (7) in that order, wherein one or more than one air hole (15) is/are disposed on the exterior body walls in the vicinity of a heat exchanger (11) and that provides the heat exchanger (11) to be in contact with the ambient air and by a heating fan (12) that sucks the ambient air through the air holes (15) and delivers it onto the heat exchanger (11) **characterized by** disposing
said heat exchanger (11) at the portion of the circulation line (10) between the evaporator (7) and the capillary tube (9), such that refrigerant flows through the capillary tube (9), the heat exchanger (11), and the evaporator (7) in that order, that contacts with the ambient air and that provides the refrigerant in the circulation line (10) to be heated by transferring the ambient air temperature thereto,
and wherein a temperature sensor (13) detects the ambient air temperature and a control unit (14) which compares the data of the ambient air temperature received from the temperature sensor (13) with the refrigerant temperature at the evaporator (7) inlet determined previously by the experimental studies and recorded in the memory thereof, and wherein said control unit (14) provides the heating fan (12) to be operated, if the ambient air temperature is higher than the refrigerant temperature, and which provides the heating fan (12) to be stopped, if the temperature of the ambient air is lower than the temperature of the refrigerant.

## Patentansprüche

1. Wäschetrockner (1), umfassend eine Trommel (2), in die Wäsche zum Trocknen gegeben wird, ein Trockenluftgebläse (3), ein Luftzirkulationskanal (4), in dem der Trockenluftzyklus durchgeführt wird, und eine Wärmepumpe (5) mit einem Kompressor (6), in dem der Kühlzyklus durchgeführt wird und der dafür sorgt, dass das Kältemittel angesaugt und verdichtet wird, einen Verdampfer (7), der dafür sorgt, dass die Trockenluft im Luftzirkulationskanal (4) entfeuchtet wird, einen Kondensator (8), der dafür sorgt, dass die entfeuchtete Luft erwärmt wird, ein Kapillarrohr (9), das zwischen dem Kondensator (8) und dem Verdampfer (7) angeordnet ist, und eine Zirkulationsleitung (10), die aus Rohren gebildet ist, die dafür sorgen, dass das vom Kompressor (6) verdichtete Kältemittel an den Kondensator (8), das Kapillarrohr (9) und den Verdampfer (7) in der aufgeführten Reihenfolge geleitet wird, wobei ein oder mehrere Luftlöcher (15) an Außengehäusewänden in der Nähe eines Wärmetauschers (11) vorgesehen sind und dafür sorgen, dass der Wärmetauscher (11) in Kontakt mit der Umgebungsluft steht, und durch ein Erwärmungsgebläse (12), das die Umgebungsluft durch die Luftlöcher (15) saugt und an den Wärmetauscher (11) leitet, **gekennzeichnet durch** Anordnen des Wärmetauschers (11) derart, dass das Kältemittel **durch** das Kapillarrohr (9), den Wärmetauscher (11) und den Verdampfer (7) in der angegebenen Reihenfolge strömt, an dem Abschnitt der Zirkulationsleitung (10) zwischen dem Verdampfer (7) und dem Kapillarrohr (9), der in Kontakt mit der Umgebungsluft steht und dafür sorgt, dass das Kältemittel in der Zirkulationsleitung (10) **durch** Übertragen der Umgebungslufttemperatur darauf erwärmt wird, und wobei ein Temperatursensor (13) die Umgebungslufttemperatur erkennt und eine Steuereinheit (14) die Daten der Umgebungslufttemperatur vom Temperatursensor (13) mit der Kältemitteltemperatur am Einlass des Verdampfers (7) vergleicht, die **durch** Versuche im Voraus bestimmt wurde und in ihrem Speicher aufgezeichnet ist, und wobei die Steuereinheit (14) dafür sorgt, dass das Erwärmungsgebläse (12) betrieben wird, wenn die Umgebungslufttemperatur höher als die Kältemitteltemperatur ist, und das Erwärmungsgebläse (12) angehalten wird, wenn die Temperatur der Umgebungsluft niedriger als die Temperatur des Kältemittels ist.

## Revendications

1. Un sèche-linge (1) comprenant un tambour (2) dans lequel le linge à sécher est placé, un ventilateur d'air de séchage (3), un conduit de circulation d'air (4) dans lequel le cycle de l'air de séchage est effectué, et une pompe à chaleur (5) qui présente un compresseur (6) dans lequel le cycle du fluide frigorigène est effectué et qui permet la succion et la compression du fluide frigorigène, un évaporateur (7) qui permet la déshumidification de l'air de séchage dans le conduit de circulation d'air (4), un condenseur (8) qui permet le chauffage de l'air de séchage déshumidifié, un tube capillaire (9) qui est disposé entre le condenseur (8) et l'évaporateur (7), et une conduite de circulation (10) composée de tuyaux qui permet au fluide frigorigène comprimé par le compresseur (6) d'être livré au condenseur (8), au tube capillaire (9) et à l'évaporateur (7) dans cet ordre, où un ou plus d'un trou d'air (15) est/sont disposé(s) sur les parois extérieures du corps à proximité d'un échangeur de chaleur (11), permettant à l'échangeur de chaleur (11) d'être en contact avec l'air ambiant et un ventilateur de chauffage (12) qui aspire l'air ambiant à travers les trous d'air (15) et l'envoie sur l'échangeur de chaleur (11), **caractérisé par** la disposition dudit échangeur de chaleur (11) à la partie de la conduite de circulation (10) entre l'évaporateur (7) et le tube capillaire (9) de telle sorte que le fluide frigorigène écoule à travers le tube capillaire (9), l'échangeur de chaleur (11) et l'évaporateur (7) dans cet ordre, qui contacte l'air ambiant et qui permet le chauffage du fluide frigorigène dans la conduite de circulation (10) en délivrant la chaleur de 'air ambiant sur celui-ci, et où un capteur de température (13) détecte la température de l'air ambiant et une unité de commande (14) qui compare les données de la température de l'air ambiant reçues du capteur de température (13) avec la température du fluide frigorigène à l'entrée de l'évaporateur (7) déterminée précédemment par les études expérimentales et enregistrée dans la mémoire de celle-ci, et où ladite unité de commande (14) permet le fonctionnement du ventilateur de chauffage (12) si la température de l'air ambiant est supérieure à la température du fluide frigorigène, et qui permet l'arrêt du ventilateur de chauffage (12) si la température de l'air ambiant est inférieure à la température du fluide frigorigène.
